# EUROPEAN PATENT SPECIFICATION

(11) **EP 0 968 627 B1**
(45) Date of publication and mention of the grant of the patent: **12.01.2005**
(21) Application number: 98907905.8
(22) Date of filing: 13.03.1998
(51) Int. Cl.: H05B 6/12

(54) **INDUCTION COOKING RELUCTANCE REDUCTION**
INDUKTIONSKOCHVORRICHTUNG VERSEHEN MIT VERMINDERUNG DER RELUKTANZ
REDUCTION DE LA RELUCTANCE DE CUISSON PAR INDUCTION

(30) Priority: 13.03.1997 DK 27697
(43) Date of publication of application: 05.01.2000
(73) Proprietor: AKTIEBOLAGET ELECTROLUX, 105 45 Stockholm (SE)
(72) Inventor: ESKILDSEN, Christian, DK-5591 Gelsted (DK)
(74) Representative: Svahn, Göran
(86) International application number: PCT/DK1998/000098
(87) International publication number: WO 1998/041063

(56) References cited:
- US-A- 3 928 744
- US-A- 3 949 183

## Description

The invention relates to a core structure for an induction heating element for use in a cooker for food.

Induction heating coils are well-known, comprising as a minimum a flat "pancake" coil fitted below and parallel to the cooking vessel. The magnetic field around such a coil has large stray field which does not contribute to the heating but rather heats up irrelevant metal parts. In order to improve the situation it is known to place a number of radially disposed ferrite rods on the underside of the coil. In order to further improve the functioning of this heating method, a more complete core structure is known, being constituted of a shallow dish-shaped structure having an upwards-facing rim and a central pole piece. It is important to provide a high relative permeability in order to attract as many flux lines as possible, but with a limited permeability the length and the placing of the ferromagnetic material obtains greater importance.

It is the purpose of the invention to provide a core structure which is improved with respect to the shallow dish-shaped structure and which permits the use of material having a lower permeability (which may in turn mean a lower admixture of high-permeability material).

This is obtained in a core structure according to the invention which is particular in that the core structure has a thickness of ferromagnetic material in the central region of the bottom which increases towards the centre to from 1.2 to 2.5 times greater than the rim thickness.

An advantageous embodiment provides the increase in thickness by means of an inverted frusto-conical extension to the bottom. This extension may be made in the same ferromagnetic material or in a material with a different relative permeability, preferably a higher relative permeability.

In a further advantageous embodiment the increase is obtained by means of a diametrical extension to the central pole piece which forms part of a toroidal surface. This requires the disc shaped coil to have a larger small diameter, however the coupling to the core material increases.

In a further advantageous embodiment a further increase in thickness is obtained near the rim in that the inside region between bottom and rim is formed with a similar part of a toroidal surface. In this way a winding chamber is obtained with an advantageous reduction in reluctance where the lines of force have to bend to conform to the core shape.

A further improvement is obtained in that the outside of the transfer region between bottom and rim is formed with a rounding corresponding to part of a toroidal surface. This in practice means removal of ferromagnetic material which does not contribute greatly to the conduction of flux lines.

The invention will be described in greater detail with reference to the drawing in which
Fig. 1 shows a core with a frusto-conical extension,
Fig. 2 shows a core with an extension to the diameter of the central pole piece,
Fig. 3 shows the arrangement providing a winding chamber with reduced reluctance near the rim, and
Fig. 4 shows a core where virtually inactive magnetic material has been removed.

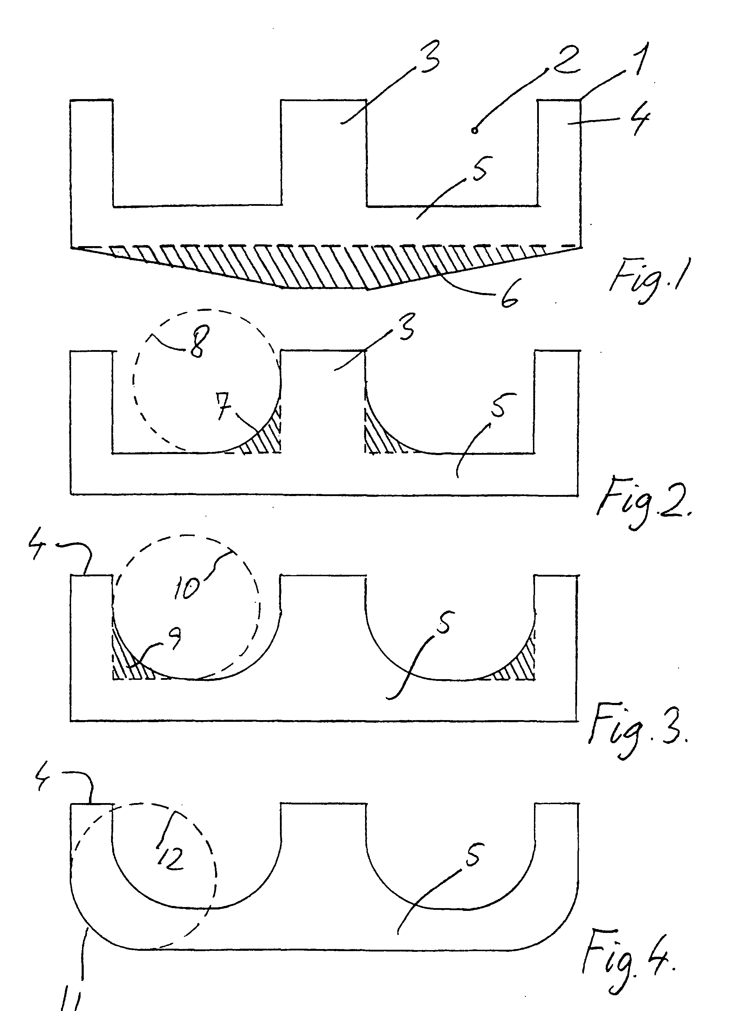

In Fig. 1 is shown a core 1 which has a circular winding space 2 surrounding a central pole 3 and confined within a rim 4. The core is completed by means of a bottom 5. According to one embodiment of the invention, the reluctance in the core is reduced by the addition of more ferromagnetic material on the bottom 5, as shown at 6.

A different embodiment is shown in Fig. 2 which shows essentially the same dimensions of core as in Fig. 1, but where the central pole 3 obtains an increase of diameter and hence of ferroelectric material near the bottom as shown at 7. In the embodiment shown, the surface delimiting the increased amount of material is part of a torus with a generatrix circle 8.

In Fig. 3 the shape of core shown in Fig. 2 is further modified by means of an increase of material where the rim 4 joins the bottom 5, such as it is shown at 9. In the embodiment shown, the surface delimiting the increased amount of material is part of a torus with a generatrix circle 10.

In Fig. 4 the shape of the core is improved with respect to the basic shapes shown in Fig. 2 and Fig. 3, in that the outside edge of the core where the rim 4 joins the bottom 5, such as it is shown at 11. In the embodiment shown, the surface delimiting the saving in material is part of a torus with a generatrix circle 12. The material saved contributes to using the ferromagnetic material better than in the basic core shape 3, 4, 5 shown in Fig. 1, and Fig. 4 shows the application of all the features simultaneously.

## Claims

1. A core (1) for an induction heating apparatus comprising a core part having a rim (4), a bottom (5), and a central pole piece (3), **characterized in that** the core structure has a thickness of ferromagnetic material in the central region of the bottom (5) which increases towards the centre to from 1.2 to 2.5 times greater than the rim (4) thickness.

2. A core according to claim 1,
**characterized in that** the thickness increase is obtained by means of an inverted frusto-conical extension to the bottom (5).

3. A core according to claim 1,
**characterized in that** the thickness increase is obtained by means of a diametrical extension to the central pole piece (3) which forms part of a toroidal surface.

4. A core according to claim 3,
**characterized in that** the inside transfer region between bottom (5) and rim (4) is formed with a similar part of a toroidal surface.

5. A core according to claim 3,
**characterized in that** the outside of the transfer region between bottoms (5) and rim (4) is formed with a rounding corresponding to part of a toroidal surface.

## Patentansprüche

1. Kern (1) für eine Induktionsheizapparatur, welche ein Kernteil mit einem Rand (4), einem Boden (5) und einem mittigen Polstück (3) umfasst, **dadurch gekennzeichnet, dass** die Kernstruktur eine Stärke an ferromagnetischem Material im mittleren Bereich des Bodens (5) aufweist, die in Richtung auf die Mitte auf den 1,2- bis 2,5-fachen Wert der Stärke des Randes (4) zunimmt.

2. Kern gemäß Anspruch 1, **dadurch gekennzeichnet, dass** die Zunahme der Stärke mittels einer Erweiterung am Boden (5) in Form eines umgekehrten Kegelstumpfes erreicht wird.

3. Kern gemäß Anspruch 1, **dadurch gekennzeichnet, dass** die Zunahme der Stärke mittels einer diametralen Erweiterung am mittigen Polstück (3), die Teil einer Ringfläche bildet, erreicht wird.

4. Kern gemäß Anspruch 3, **dadurch gekennzeichnet, dass** der innere Übergangsbereich zwischen dem Boden (5) und dem Rand (4) mit einem Teil ausgebildet ist, der einer Ringfläche ähnelt.

5. Kern gemäß Anspruch 3, **dadurch gekennzeichnet, dass** der äußere Übergangsbereich zwischen dem Boden (5) und dem Rand (4) mit einer Rundung ausgebildet ist, welche einem Teil einer Ringfläche entspricht.

## Revendications

1. Coeur (1) destiné à un appareil de chauffage par induction, comprenant une partie du coeur ayant une jante (4), un fond (5) et une pièce polaire centrale (3), **caractérisé en ce que** la structure de coeur a une épaisseur de matériau ferromagnétique dans la région centrale du fond (5) qui augmente vers le centre de 1,2 à 2,5 fois supérieure à l'épaisseur de la jante (4)

2. Coeur selon la revendication 1, **caractérisé en ce que** l'augmentation de l'épaisseur est obtenue au moyen d'une extension tronconique inversée vers le fond (5).

3. Coeur selon la revendication 1, **caractérisé en ce que** l'augmentation de l'épaisseur est obtenue au moyen d'une extension diamétrale vers la pièce polaire centrale (3) qui fait partie intégrante d'une surface torique.

4. Coeur selon la revendication 3, **caractérisé en ce que** la région de transfert intérieure entre le fond (5) et la jante (4) est formée par une partie similaire d'une surface torique.

5. Coeur selon la revendication 3, **caractérisé en ce que** l'extérieur de la région de transfert entre le fond (5) et la jante (4) est formée par un arrondi correspondant à la partie d'une surface torique.
